# EUROPÄISCHE PATENTSCHRIFT

(11) **EP 3 051 241 B1**
(45) Veröffentlichungstag und Bekanntmachung des Hinweises auf die Patenterteilung: **14.08.2019**
(21) Anmeldenummer: 16152365.9
(22) Anmeldetag: 22.01.2016
(51) Int. Cl.: F26B 17/04, F26B 25/00

(54) **AUFGABEVORRICHTUNG FÜR PASTÖSE PRODUKTE AUF EIN BAND**
DISPENSING DEVICE FOR PASTY PRODUCTS ON A BELT
DISPOSITIF D'ALIMENTATION DE PRODUITS PATEUX SUR UNE BANDE

(30) Priorität: 30.01.2015 AT 500732015
(43) Veröffentlichungstag der Anmeldung: 03.08.2016
(73) Patentinhaber: Andritz Technology and Asset Management GmbH, 8045 Graz (AT)
(72) Erfinder: BALDAUF, Heinz, 88167 Stiefenhofen (DE); KRÖHL, Paul, 88212 Ravensburg (DE)
(74) Vertreter: Tschinder, Thomas

(56) Entgegenhaltungen:
- EP-A1- 0 552 583
- EP-A2- 0 756 823
- WO-A1-2013/143722
- WO-A1-2014/037424
- DE-A1- 2 003 696
- DE-A1- 3 518 323
- DE-A1- 10 034 468
- DE-A1-102012 025 259
- JP-B1- 5 337 924
- US-A- 2 606 740
- US-A- 3 243 849
- US-A- 4 297 793
- US-A1- 2003 185 952
- US-A1- 2010 242 743

## Beschreibung

Die Erfindung betrifft eine Aufgabevorrichtung für pastöse Produkte auf ein Band, mit einer Formgebungseinrichtung, wobei eine Matrize mit Bohrungen bzw. Kanälen, durch die das Produkt fließen kann, vorgesehen ist, wobei die Matrize als Welle mit durchgehenden radialen Kanälen versehen ist und sich in einem Gehäuse mit Zufuhröffnung für das Produkt und Abströmöffnung für das Extrudat befindet, wobei die Kanäle Zufuhr- und Abströmöffnungen aufweisen. Sie betrifft auch eine Anlage mit Aufgabevorrichtung.

Bei der konvektiven Trocknung von pastösen Produkten kommt es entscheidend darauf an, durch Granulierung eine ausreichende Oberfläche für den Stoff- und Wärmeaustausch zu schaffen. Bei den meisten Konvektivtrocknern, wie z.B. Wirbelschichtapparate, Trommeltrockner, Stromrohrtrockner,.. ist dies schon eine hinreichende Voraussetzung. Bei Bandtrocknern muss eine weitere Bedingung erfüllt sein. Bei ihnen ruht das granulierte Produkt auf einem gasdurchlässigen Transportband, womit es quer durch einen Heißgasstrom gefördert wird. Damit eine effiziente gleichmäßige Trocknung erfolgt, muss das Produkt nicht nur granuliert sein, sondern auch mit konstanter Schichtstärke gleichmäßig auf das durchströmte Band aufgebracht werden, so dass sich eine homogen poröse Schicht ergibt, die gleichmäßig vom Trocknungsgas durchströmt werden kann.

Diese Anforderungen werden auf unterschiedliche Art und Weise erfüllt. Gebräuchlich ist die Granulierung durch Aufbauagglomeration in einem Mischer oder Granulierapparat. Dabei wird das pastöse Produkt im richtigen Verhältnis mit rückgeführtem trockenem Produkt vermischt und durch Zufuhr mechanischer Energie in eine krümelige Struktur überführt. Beim Bandtrockner wird nun durch Schnecken, Abstreifer o. ä. das rieselfähige Granulat mit konstanter Schichthöhe auf das Band verbracht. Nachteilig an diesem Verfahren ist der erhöhte apparative und regelungstechnische Aufwand. Es werden zusätzliche Förderorgane, Granulierapparate und Verteileinrichtungen benötigt und es muss eine präzise Dosierung von feuchtem und trockenem Produkt sichergestellt sein, da es nur einen engen Mischfeuchtebereich gibt, in dem die Granulierung zufriedenstellende Ergebnisse liefert.

Alternative Verfahren zerteilen das pastöse Feuchtprodukt durch rotierende Werkzeuge, wie fräserähnliche Walzen, Schläger- und Stifträder, Käfigmühlenräder, Schleuderräder o. ä. Diese haben sich jedoch beim Bandtrockner nicht durchgesetzt.

Ein drittes wichtiges Verfahren ist die Extrusion des pastösen Produktes durch eine Matrize mit mehreren Löchern, die das Produkt in dünnere Stränge aufteilt. Das Produkt muss pumpfähig sein, damit es durch die Matrizenlöcher fließen kann. Dafür muss vor der Matrize Druck aufgebaut werden, was auf vielfältige Art und Weise erfolgen kann. Vorgeschaltete Verdrängerpumpen wie z.B. Kolbenpumpen, Exzenterschneckenpumpen, Doppelwellenschneckenförderer, etc. bieten sich an und erlauben die räumliche Trennung von Förderung und Formgebung. Daneben haben sich integrierte Apparate durchgesetzt wie Kollergänge, wo ein Walzenpaar auf der Lochmatrize läuft und der Druckaufbau im Walzspalt erfolgt. Diese Verfahren haben gemeinsam, dass die räumliche Ausdehnung der Matrize wenige Dezimeter beträgt. Für die Anwendung mit einem Bandtrockner ist es daher erforderlich, dass die Matrize über die wesentlich größere Bandbreite (bis zu mehreren Metern) geführt werden muss, um eine gleichmäßige Beschickung zu erreichen.

In der DE 3518323 A1 wird eine Vorrichtung beschrieben, die diesen Nachteil vermeidet, in dem die Matrize länglich ausgeführt wird und sich in dem Boden eines Kastens über die gesamte Breite des Bandes erstreckt. Der Druck wird durch eine in dem Kasten hin und her schwenkende Klappe erzeugt, die eine Hälfte der Matrize bedeckt und deren Drehachse mittig in Längsrichtung der Matrize liegt. Die Beschickung erfolgt durch eine darüber liegende Zuführeinrichtung, ebenfalls über die gesamte Länge.

Eine Variante dieses Prinzips findet sich in der sogenannten Schwenkpresse der Fa. EL-A Verfahrenstechnik GmbH, wo die Klappe durch einen Zylinder mit zwei längsverlaufenden Dichtleisten ersetzt ist. Der Zylinder oszilliert in einem Trog mit halbkreisförmig gewölbtem Boden, an dessen tiefster Stelle ebenfalls eine Dichtleiste sitzt. Links und rechts von dieser Leiste verläuft in einem schmalen Bereich, aber über die gesamte Länge, die Lochmatritze. Durch die oszillierende Bewegung werden wechselseitig die durch die drei Leisten gebildeten Räume mit pastösem Produkt gefüllt und über die Löcher der Matrize wieder entleert.

Allen Matrizenverfahren gemeinsam ist jedoch die Neigung zur Verstopfung der nur wenige Millimeter großen Löcher durch Fremdkörper, insbesondere Fasern, wie z.B. Haare, die gerade im Klärschlamm vermehrt auftreten. In der DE 3518323 A1 wird beschrieben, wie durch eine spezielle Anpassung der Drehwinkelgeschwindigkeit der Pressklappe ein Saugeffekt entstehen soll, der die Fasern geringfügig verschieben und beim nächsten Pressvorgang austreiben soll. Insbesondere Haare neigen wegen ihrer im Vergleich zur Lochabmessung großen Länge jedoch dazu, sich über zwei Löcher festzusetzen, was durch eine nur geringfügige Verschiebung nicht verhindert werden kann. Die US 2487910 zeigt eine Extrudiervorrichtung, die für die Herstellung von strangförmigen Kunststoffteilen vorgesehen ist. Da hier nur reine Produkte verwendet werden ist Verstopfung hier kein Thema. Auch die DE 10 2012 025 259 zeigt eine Vorrichtung zum Stranggießen für thermoplastische Kunststoffe. Die US 5921001 zeigt eine Anlage zur Trocknung oder Kühlung eines Produktes, das mittels eines oszillierenden Schachtes auf ein Band aufgegeben wird. Andere Extrudiervorrichtung werden in DE 2003696 A1, WO 2013143722 A1, US 4297793 A, US 2003185952 A1, US 2010242743 A1 und EP 0756823 A2 gezeigt.

Aufgabe der Erfindung ist es eine Vorrichtung für das Matrizenverfahren zu schaffen, bei der die Verstopfungsneigung eliminiert wird.

Die Erfindung ist daher dadurch gekennzeichnet, dass die Welle Nuten aufweist, in die die Zufuhr- und Abströmöffnungen der Kanäle münden. Durch die Ausbildung der Matrize als Welle kann durch Drehung die Durchströmrichtung umgekehrt werden, wodurch eine Reinigung der Kanäle erfolgt, wobei durch die Nuten eine leichte Entfernung der Verunreinigungen erfolgt.

Eine vorteilhafte Weiterbildung der Erfindung ist dadurch gekennzeichnet, dass die Welle mindestens eine, vorzugsweise zwei Reihen von Kanälen aufweist, wobei jede Reihe von Kanälen 4 bis 10, beispielsweise sechs, Kanäle aufweisen kann. Dadurch kann die Welle besonders gut an den gewünschten Durchsatz angepasst werden.

Eine günstige Ausgestaltung der Erfindung ist dadurch gekennzeichnet, dass der Durchmesser der Kanäle zwischen 2 und 30 mm, vorzugsweise zwischen 5 und 10 mm beträgt. Dadurch kann die Welle besonders gut an die Eigenschaften des Produkts angepasst werden.

Eine günstige Weiterbildung der Erfindung ist dadurch gekennzeichnet, dass die Welle mit einem Antrieb versehen ist, der eine Drehung der Welle zur Umkehrung der Durchflussrichtung ermöglicht. Damit kann automatisiert ein Reinigungszyklus durchgeführt werden, wobei bei einer plötzlichen Verstopfung auch eine zusätzliche Umkehr der Durchflussrichtung und damit eine sofortige Reinigung eingeleitet werden kann.

Die Erfindung betrifft auch eine Anlage mit einer Aufgabevorrichtung die dadurch gekennzeichnet ist, dass eine Zufuhrschnecke vorgesehen ist, an deren Austrittsende die Aufgabevorrichtung angeordnet ist, wobei ein kontinuierlich umlaufendes Band vorgesehen sein kann, über dem die Aufgabevorrichtung angeordnet ist. Damit kann durch die Schnecke der erforderliche Pressdruck kontinuierlich aufgebracht werden und durch das Band das Extrudat kontinuierlich weggefördert werden. Das Band kann vorzugsweise aus Textil- oder Metallgewebe bestehen, aus gelochten Segmenten oder aus aneinandergereihten Horden mit gasdurchlässigem Boden.

Eine günstige Weiterbildung der Erfindung ist dadurch gekennzeichnet, dass das Band ein Trocknungsband eines Bandtrockners ist. Die erfindungsgemäße Aufgabevorrichtung läßt sich speziell bei Bandtrockner vorteilhaft einsetzen um die zu trocknenden Produkte möglichst gleichmäßig zu verteilen.

Eine vorteilhafte Ausgestaltung der Erfindung ist dadurch gekennzeichnet, dass die Austragsvorrichtung schwenkbar angeordnet ist, wobei die Austragsvorrichtung alternativ linear verfahrbar angeordnet sein kann.

Eine günstige Weiterbildung der Erfindung ist dadurch gekennzeichnet, dass die Austragsvorrichtung quer zur Förderrichtung des Bandes montiert ist und sich über die gesamte Breite des Bandes erstreckt ebensowie die eine oder mehrere der Kanalreihen der Matrize. Die Anzahl der Kanäle in jeder Reihe wird dabei so gewählt, dass sich eine gleichmäßige Verteilung des Extrudats über die Breite des Bandes ergibt.

Die reduzierte Verstopfungsneigung wird im Wesentlichen durch regelmäßige Umkehr der Durchströmungsrichtung in der Matrize ohne Unterbrechung des Dosiervorgangs erreicht, so dass druckseitig beginnende Verstopfungen einzelner Löcher oder Kanäle nach dem Richtungswechsel einfach in Richtung Band ausgetragen werden. Dadurch ist ein störungsfreier Dauerbetrieb mit gleichbleibender Güte der Produktverteilung ohne regelmäßige oder unerwartete Reinigungsunterbrechungen gewährleistet.

Die Erfindung wird nun anhand der Zeichnungen beispielhaft beschreiben, wobei
Fig. 1 einen Längsschnitt durch eine erfindungsgemäße Austragsvorrichtung,
Fig. 2 einen Querschnitt durch eine erfindungsgemäße Austragsvorrichtung,
Fig. 3 eine Ansicht einer erfindungsgemäßen Anlage und
Fig. 4 eine Draufsicht auf eine erfindungsgemäße Anlage
darstellt.

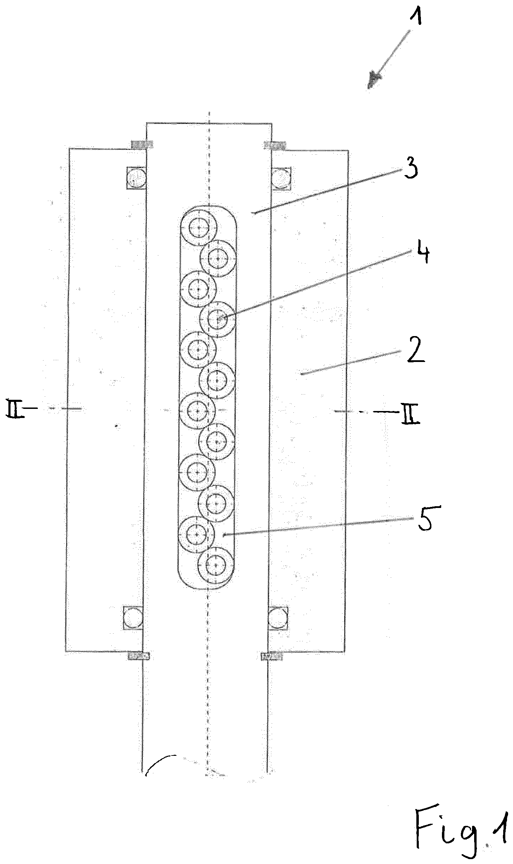

Fig. 1 zeigt einen Längsschnitt durch eine erfindungsgemäße Austragsvorrichtung 1. Diese weist ein Gehäuse 2 auf, in dem eine Welle 3 angeordnet ist, die als Matrize dient. Sie ist mit einer oder mehreren radialen Kanalreihen, hier ausgeführt als zwei Reihen von zylindrischen Bohrungen 4 oder Kanälen versehen. Jede Reihe umfasst in diesem Beispiel 6 Bohrungen, typisch sind 4-10 Kanäle/Bohrungen, es können aber auch deutlich mehr oder weniger sein, abhängig von der Dosierleistung. Der hydraulische Durchmesser der Kanäle hängt von den rheologischen Eigenschaften des pastösen Produkts ab und liegt zwischen 2 und 30 mm, typisch zwischen 5 und 10 mm.

Oberhalb der Bohrungsreihen ist die Welle 3 am Umfang längs abgeflacht oder vertieft, z.B. mit einer Nut 5 versehen. Das ermöglicht nicht nur ein leichteres Bohren, sondern dient in erster Linie der Mitnahme von Fremdkörpern bei der nachfolgend beschriebenen Drehung. Der benötigte Pressdruck kann durch Länge und Formgebung der Bohrung beeinflusst werden.

Die Welle 3 ist typischerweise im Gehäuse 2, über das das pastöse Produkt, z.B. Klärschlamm, zugeführt wird, geführt. In periodischen Intervallen, abhängig von der Verstopfungsneigung, wird die Matrizenwelle 3 soweit gedreht, dass sich die Fließrichtung in den Kanälen 4 umkehrt und vor dem ehemaligen Eintrittsloch liegende Fremdkörper herausgedrückt werden. Auch Fasern bzw. Haare, die mit den beiden Enden in zwei verschiedenen Kanälen stecken werden dadurch entfernt.

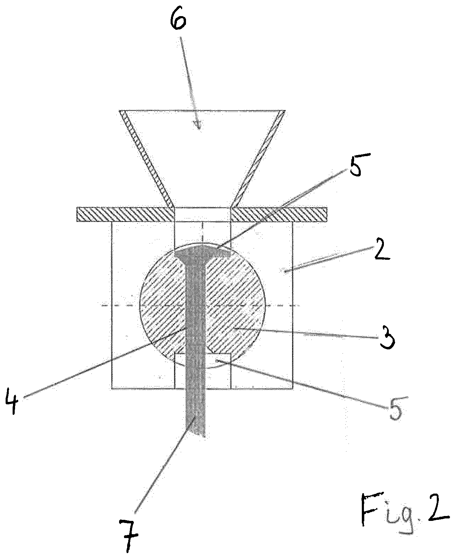

Fig. 2 zeigt einen Querschnitt durch die erfindungsgemäße Aufgabevorrichtung gemäß Linie II-II in Fig. 1. Das pastöse Produkt wird mit einer geeigneten Fördereinrichtung von oben über eine Zufuhröffnung 6 in das Gehäuse 2 gedrückt und verlässt es durch die formgebenden Kanäle 4 als mehrfacher Strang 7 auf das Band und in den Trockner.

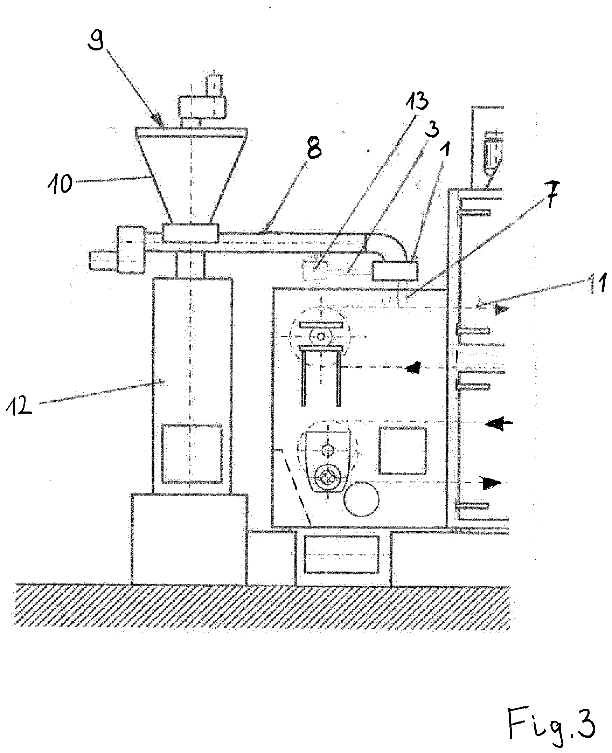

Fig. 3 zeigt eine Anlage mit erfindungsgemäßer Aufgabevorrichtung 1 im Zusammenbau mit einem zweistufigen Bandtrockner. Die erfindungsgemäße Aufgabevorrichtung 1 ist hier am Austritt einer Schneckenpumpe 8 montiert. Das pastöse Produkt 9 wird über ein Vorratsgefäß 10 der Schneckenpumpe 8 zugeführt und durch die Vorrichtung 1 in Strängen 7 auf dem Trocknungsband 11 der ersten Stufe abgelegt. Die Aufgabevorrichtung 1 ist hier zusammen mit der Schneckenpumpe 8 auf einem Schwenkantrieb 12 angeordnet. Durch die gesteuerte Verschwenkung wird die gesamte Breite des Bandes 11 gleichmäßig belegt. Dazu ist es erforderlich, dass die Schwenkgeschwindigkeit auf die Bandgeschwindigkeit, die Förderleistung und die gewählte Geometrie der Welle abgestimmt ist. Alternativ kann die Aufgabevorrichtung auch linear quer zur Bandlaufrichtung verschiebbar angeordnet sein.

Die Welle 3 der Aufgabevorrichtung 1 ist mit einem Antrieb 13 versehen. Im Gehäuse 2 der Vorrichtung 1 wird die Matrizenwelle 3 bedarfsweise vom Antrieb 13 soweit gedreht, dass sich die Förderrichtung durch die Kanäle 4 umkehrt.

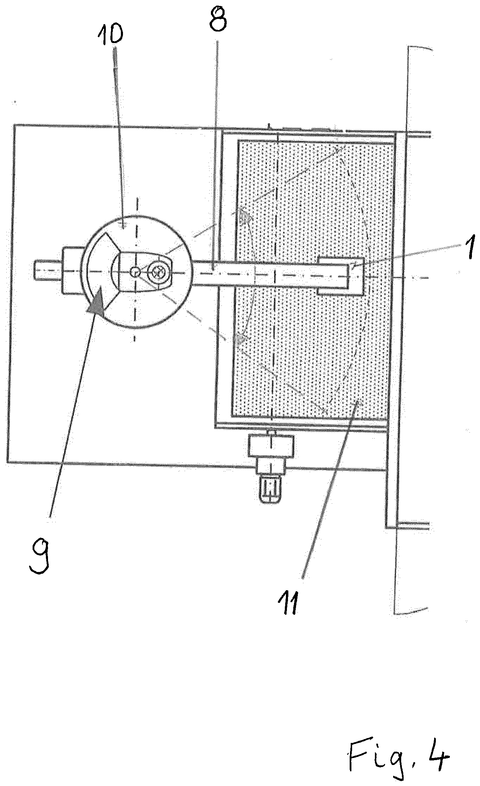

Fig. 4 stellt eine Draufsicht auf die Anlage nach Fig. 3 dar, wobei der Schwenkwinkel der Schneckenpumpe 8 mit Aufgabevorrichtung 1 und der Ablagebereich des Produktstranges 7 gut zu erkennen ist.

Die Erfindung ist nicht auf die dargestellten Beispiele beschränkt. Vielmehr kann die Austragsvorrichtung gegebenenfalls verfahrbar ausgeführt werden oder sich über die gesamte Bandbreite erstrecken.

## Patentansprüche

1. Aufgabevorrichtung für pastöse Produkte, mit einer Formgebungseinrichtung, wobei eine Matrize mit Bohrungen (4) bzw. Kanälen, durch die das Produkt fließen kann, vorgesehen ist, wobei die Matrize als Welle (3) mit durchgehenden radialen Kanälen (4) versehen ist und sich in einem Gehäuse (2) mit Zufuhröffnung (6) für das Produkt und Abströmöffnung für das Extrudat (7) befindet, wobei die Kanäle (4) Zufuhr- und Abströmöffnungen aufweisen, **dadurch gekennzeichnet, dass** die Welle Nuten (5) aufweist, in die die Zufuhr- und Abströmöffnungen der Kanäle (4) münden.

2. Aufgabevorrichtung nach Anspruch 1, **dadurch gekennzeichnet, dass** die Welle (3) mindestens eine, vorzugsweise zwei Reihen von Kanälen (4) aufweist.

3. Aufgabevorrichtung nach einem der Ansprüche 1 oder 2, **dadurch gekennzeichnet, dass** der Durchmesser der Kanäle (4) zwischen 2 und 30 mm, vorzugsweise zwischen 5 und 10 mm beträgt.

4. Aufgabevorrichtung nach einem der Ansprüche 1 bis 3, **dadurch gekennzeichnet, dass** die Welle (3) mit einem Antrieb (13) versehen ist, der eine Drehung der Welle (3) zur Umkehrung der Durchflussrichtung ermöglicht.

5. Aufgabevorrichtung nach einem der Ansprüche 2 bis 4, **dadurch gekennzeichnet, dass** jede Reihe von Kanälen (4) 4 bis 10, beispielsweise sechs, Kanäle (4) aufweist.

6. Anlage mit einer Aufgabevorrichtung nach einem der Ansprüche 1 bis 5, **dadurch gekennzeichnet, dass** eine Zufuhrschnecke (8), beispielsweise Schneckenpumpe, vorgesehen ist, an deren Austrittsende die Aufgabevorrichtung (1) angeordnet ist.

7. Anlage nach Anspruch 6, **dadurch gekennzeichnet, dass** ein kontinuierlich umlaufendes Band (11) vorgesehen ist, über dem die Aufgabevorrichtung (1) angeordnet ist.

8. Anlage nach Anspruch 6 oder 7, **dadurch gekennzeichnet, dass** das Band (11) ein Trocknungsband eines Bandtrockners ist.

9. Anlage nach einem der Ansprüche 6 bis 8, **dadurch gekennzeichnet, dass** die Austragsvorrichtung (1) schwenkbar angeordnet ist.

10. Anlage nach einem der Ansprüche 6 bis 8, **dadurch gekennzeichnet, dass** die Austragsvorrichtung (1) linear verfahrbar angeordnet ist.

11. Anlage nach einem der Ansprüche 6 bis 8, **dadurch gekennzeichnet, dass** sich die Austragsvorrichtung (1) quer über die gesamte Bandbreite erstreckt.

## Claims

1. Device for feeding pasty products and with a shaping device, where a die with bore holes (4) and channels is provided through which the product can flow, where the die is provided in the form of a shaft (3) with continuous radial channels (4) and is located in a housing (2) with feed opening (6) for the product and outflow opening for the extruded material (7), where the channels (4) have feed and outflow openings, **characterised in that** the shaft has grooves (5) into which the feed and outflow openings of the channels (4) open.

2. Feed unit according to Claim 1, **characterised in that** the shaft (3) has at least one or preferably two rows of channels (4).

3. Feed unit according to one of Claims 1 or 2, **characterised in that** the diameter of the channels (4) is between 2 and 30 mm, preferably between 5 and 10 mm.

4. Feed unit according to one of Claims 1 to 3, **characterised in that** the shaft (3) is provided with a drive (13) that makes it possible to rotate the shaft (3) in order to reverse the direction of flow.

5. Feed unit according to one of Claims 2 to 4, **characterised in that** each row of channels (4) comprises between 4 and 10, for example six, channels (4).

6. Plant with a feed unit according to one of Claims 1 to 5, **characterised in that** a feed screw (8), for example a screw pump, is provided with the feed unit (1) arranged at its outlet end.

7. Plant according to Claim 6, **characterised in that** a continuously revolving belt (11) is provided above which the feed unit (1) is arranged.

8. Plant according to Claim 6 or 7, **characterised in that** the belt (11) is the drying belt of a belt dryer.

9. Plant according to one of Claims 6 to 8, **characterised in that** the discharge device (1) has a pivoting arrangement.

10. Plant according to one of Claims 6 to 8, **characterised in that** the discharge device (1) can be moved in linear direction.

11. Plant according to one of Claims 6 to 8, **characterised in that** the discharge device (1) extends at right angles across the entire belt width.

## Revendications

1. Dispositif d'alimentation en produits pâteux, comprenant un dispositif de mise en forme, une matrice étant dotée de trous (4) ou de canaux par lesquels le produit peut s'écouler, la matrice étant conçue sous forme d'arbre (3) doté de canaux radiaux continus et se trouve dans un boîtier (2) doté d'ouverture d'amenée (6) pour le produit et d'ouverture d'écoulement pour l'extrudat (7), les canaux (4) présentant des ouvertures d'amenée et d'écoulement, **caractérisé en ce que** l'arbre présente des rainures (5) dans lesquelles débouchent les ouvertures d'amenée et d'écoulement des canaux (4).

2. Dispositif d'alimentation selon la revendication 1, **caractérisé en ce que** l'arbre (3) présente au moins une, de préférence, deux rangées de canaux (4).

3. Dispositif d'alimentation selon l'une des revendications 1 ou 2, **caractérisé en ce que** le diamètre des canaux (4) est compris entre 2 et 30 mm, de préférence entre 5 et 10 mm.

4. Dispositif d'alimentation selon l'une des revendications 1 à 3, **caractérisé en ce que** l'arbre (3) est équipé d'un entraînement (13) qui permet une rotation de l'arbre (3) pour inverser la direction du débit.

5. Dispositif d'alimentation selon l'une des revendications 2 à 4, **caractérisé en ce que** chaque rangée de canaux (4) présente de 4 à 10 canaux, par exemple six canaux (4).

6. Installation équipée d'un dispositif d'alimentation selon l'une des revendications 1 à 5, **caractérisée en ce qu'**il est prévu une vis sans fin d'amenée (8), par exemple une pompe à vis sans fin dont l'extrémité de sortie loge le dispositif d'alimentation (1).

7. Installation selon la revendication 6, **caractérisée en ce qu'**une bande continue (11) au-dessus de laquelle est disposé le dispositif d'alimentation (1).

8. Installation selon la revendication 6 ou 7, **caractérisée en ce que** la bande (11) est une bande de séchage d'un séchoir à bande.

9. Installation selon l'une des revendications 6 à 8, **caractérisée en ce que** le dispositif d'évacuation (1) est disposé en pivotement.

10. Installation selon l'une des revendications 6 à 8, **caractérisé en ce que** le dispositif d'évacuation (1) est conçu pour se déplacer linéairement.

11. Installation selon l'une des revendications 6 à 8, **caractérisée en ce que** le dispositif d'évacuation (1) s'étend transversalement sur toute la largeur de la bande.
